# DEMANDE DE BREVET EUROPEEN

(11) **EP 4 124 638 A1**
(43) Date de publication de la demande: **01.02.2023**
(21) Numéro de dépôt: 21306036.1
(22) Date de dépôt: 26.07.2021
(51) Int. Cl.: C08L 95/00

(54) **COMPOSITION DE BASES BITUME POUR LA FABRICATION DE BITUME COMPRENANT UNE HUILE DE PYROLYSE DE PLASTIQUE**

(71) Demandeur: TotalEnergies OneTech, 92400 Courbevoie (FR)
(72) Inventeur: BOULANGER, Carine, 92400 COURBEVOIE (FR); CHOFFAT, Alexandrine, 92400 COURBEVOIE (FR); BENKHALED, Mersaka, 92400 COURBEVOIE (FR)
(74) Mandataire: Blaise, Lucie

(57) **Abrégé**

L'invention concerne une composition de bases bitume comprenant au moins :
a. de 95 à 99% en poids d'au moins une base bitume ayant une pénétrabilité à 25°C inférieure ou égale à 220. 10⁻¹ mm et un point de ramollissement supérieur ou égal à 35°C.
b. de 1 à 5 % en poids d'au moins une huile de pyrolyse de plastique dont le point d'ébullition initial est d'au moins 300°C mesuré selon la norme D7169 :20.

La présente invention permet ainsi de valoriser une coupe lourde d'huile de pyrolyse plastique pour une utilisation dans un bitume routier.

## Description

### Domaine technique

La présente invention appartient au domaine des bitumes, notamment destinés à la construction routière ou au génie civil.

La présente invention concerne une composition de bases bitume comprenant une première base bitume et une huile pyrolyse issue de plastique dont le point d'ébullition initial est d'au moins 300°C.

La présente invention a également pour objet l'utilisation d'une huile de pyrolyse dans un bitume.

### État de la technique

Le bitume est le principal constituant hydrocarboné utilisé dans le domaine de la construction routière ou du génie civil. Un bitume peut être défini comme étant un mélange de plusieurs « bases bitume ». Deux ou plusieurs bases bitumes peuvent être mélangées pour former une composition de bases bitumes. Une composition de bases bitume peut former un bitume. Deux ou plusieurs compositions de bases bitume peuvent également être mélangées pour obtenir un bitume.

Afin de produire des « bases bitume », on sélectionne habituellement des bruts dits « à bitumes » en fonction de leur aptitude à produire lesdites bases. Ainsi, parmi tous les pétroles bruts référencés, seuls moins de 10 % permettent de produire des « bases bitume ». Lesdites bases sont généralement obtenues à partir de résidus issus de la distillation du pétrole brut atmosphérique et/ou sous vide. Les principaux critères de choix des bruts à bitumes sont :
- Les caractéristiques techniques des bases bitume issues de ces bruts : pénétrabilité, viscosité, point de ramollissement (TBA), etc...
- L'adéquation avec les unités des raffineries en particulier les rendements par rapport aux températures de coupe des distillations sous vide.

La production de bitumes à partir de bruts à bitume nécessite ainsi de faire fonctionner les unités pendant une durée déterminée et de les adapter à ces bruts particuliers, ce qui augmente les coûts opérationnels.

Il est également connu d'utiliser des additifs dans des bases bitume, l'objectif étant alors de pouvoir adapter les caractéristiques techniques des bases bitume. Cependant, ces additifs augmentent le coût de production des bases bitumes.

Pour pouvoir être utilisés dans le domaine de la construction routière ou du génie civil, les bitumes doivent présenter certaines propriétés physico-chimiques. Une des propriétés les plus importantes est la variation de TBA ; celle-ci doit être suffisamment faible pour éviter un vieillissement prématuré du bitume.

Il existe plusieurs moyens considérés comme couteux pour ajuster la TBA d'un bitume :
- Un premier moyen est de souffler le bitume. Le principal objectif du soufflage d'un bitume est de diminuer sa susceptibilité thermique, c'est à dire augmenter l'indice de pénétrabilité (ou indice Pfeiffer) du bitume soufflé par rapport au bitume de départ. L'opération de soufflage a pour effet de durcir le bitume traité par oxydation. Un bitume soufflé possède une température de ramollissement bille et anneau (TBA) supérieure à celle du bitume de départ et une pénétrabilité à l'aiguille (P25) du même ordre de grandeur que celle du bitume de départ. Pour mémoire, plus la pénétrabilité à l'aiguille d'un bitume est élevée, meilleure est sa maniabilité et plus sa mise en œuvre est aisée. De plus, les risques d'orniérage à la température de service d'un bitume donné sont plus faibles lorsque la TBA du bitume augmente.

Les bitumes soufflés sont fabriqués dans une unité de soufflage, en faisant passer un flux d'air et/ou d'oxygène à travers un bitume que l'on souhaite durcir. Cette opération peut être menée en présence d'un catalyseur d'oxydation, par exemple de l'acide polyphosphorique. Généralement, le soufflage est réalisé à des températures élevées, de l'ordre de 200 à 300°C, pendant des durées relativement longues typiquement comprises entre 30 minutes et 2 heures, en continu ou en batch. Ce procédé de soufflage présente un certain nombre d'inconvénients :
- La fabrication de bitume soufflé nécessite une installation de soufflage spécialement prévue à cet effet,
- Les bitumes soufflés sont plus sensibles au vieillissement que les bitumes de départ.
- Par ailleurs, les bitumes soufflés sont généralement plus fragiles à froid que le bitume de départ. Cela peut s'expliquer par le fait que le soufflage a pour effet de durcir le bitume.

- Un second moyen est d'utiliser des polymères qui ajoutés aux bases bitumes vont en modifier les propriétés. Néanmoins, l'ajout de ces polymères entraînent des coûts supplémentaires.

### Description de l'invention

Il existe donc un besoin pour une composition de bases bitume présentant des caractéristiques de TBA intéressantes et disponibles à moindre coût.

Il est connu de valoriser les déchets plastiques en les utilisant en tant que charge initiale dans des procédés chimiques (gazéification, pyrolyse, dépolymérisation, dissolution) ou dans des procédés mécaniques (broyage). Dans la charge initiale, les déchets plastiques peuvent également être associés à des déchets issus de la biomasse.

Les procédés de pyrolyse à haute température permettent de transformer des déchets plastiques en plusieurs produits dans des proportions variables selon la nature des déchets utilisés : une huile, un mélange gazeux, du coke.

L'huile issue de la pyrolyse du plastique peut être ensuite séparée en plusieurs coupes par tous types de procédé de séparation connus en soi :
- La coupe légère type naphta avec un intervalle de distillation compris entre 50 et 200°C et une masse volumique comprise entre 720 Kg/m³ et 750 Kg/m³.
- La coupe moyenne type diesel avec un intervalle de distillation compris entre 200°C et 300°C et une masse volumique comprise entre 750 Kg/m³ et 800 Kg/m³.
- La coupe lourde type VGO (Vaccum Gasoil) avec un intervalle de distillation compris entre 300°C et 450°C et une masse volumique comprise entre 800 Kg/m³ et 840 Kg/m³.
- Une coupe très lourde type VR (Visco-Réduit) avec un point initial d'ébullition d'au moins 450 °C et une masse volumique comprise entre 840 Kg/m³et 870 Kg/m³.

Seule la coupe légère type naphta peut être utilisée comme base pétrochimique en charge d'un vapocraqueur. Les coupes lourdes type VGO et très lourdes type VR ne sont pas utilisables en tant que telles comme charges de vapocraqueur. Il existe donc un besoin alternatif pour valoriser les coupes lourdes à très lourdes.

L'article « Analysis of possible use of pyrolytic products as binder in asphalt mixes", publié le 10 avril 2016 dans Gradevinar*,* mentionne des mélanges contenant 90% de bitume et 10% d'huile de pyrolyse et dont le point de ramollissement TBA est similaire à celui d'un bitume seul.

Or il a été découvert de manière inattendue que l'incorporation d'huile de pyrolyse plastique dont le point initial d'ébullition mesuré selon la norme ASTM D7169 :20 est d'au moins 300° permet de réaliser des compositions de bases bitume et donc des bitumes, notamment routiers, présentant des propriétés améliorées en termes de variation de TBA. Cette amélioration présente l'intérêt d'éviter un vieillissement prématuré du bitume par incorporation d'huile de pyrolyse de plastique dont le point initial d'ébullition est d'au moins 300°C . Plus encore, cette incorporation permet de valoriser les coupes lourdes dont le point initial d'ébullition est d'au moins 300°C et qui ne sont pas valorisables facilement.

Ainsi, l'utilisation d'huile de pyrolyse dont le point initial d'ébullition est d'au moins 300°C en tant composant d'un bitume, permet d'obtenir une propriété particulièrement recherchée dans une composition de bases bitume : la variation de TBA.

Afin de faciliter la compréhension, les termes suivants vont être définis :
Base bitume ou base : selon l'invention, on considère qu'une base bitume ou base, est le produit issu d'un procédé de raffinage (distillation atmosphérique, distillation sous vide, etc...). Il s'agit d'un produit non fini au sens où plusieurs bases bitume sont mélangées pour former un bitume.

De manière usuelle, une base bitume peut être produite par raffinage d'un pétrole brut, notamment d'un brut à bitume, qui est chauffé à 300°C, partiellement vaporisé dans un four et transféré dans une colonne de distillation atmosphérique dans laquelle s'opère la séparation des différentes fractions. Les plus légères se vaporisent tandis que les plus lourdes (résidu atmosphérique) restent en fond de colonne et passent dans un second échangeur de chaleur avant traitement en colonne de distillation sous vide. Enfin, la base bitume est récupérée au fond de cette colonne de distillation sous vide. La base bitume correspond par exemple à la coupe 560°C+ de la distillation sous vide.

De façon à ajuster les propriétés de ces bases, des procédés complémentaires peuvent être utilisés (soufflage, désasphaltage, etc...).

Plusieurs bases bitume traitées ou non après distillation sous vide sont habituellement mélangées pour constituer un bitume aux propriétés recherchées telle que la dureté.

Liant bitumineux ou bitume : ce terme définit un produit fini qui est un mélange de plusieurs bases bitume. Ce mélange de plusieurs bases bitume permet de formuler un liant bitumineux afin d'obtenir la propriété recherchée relative à une utilisation particulière.

Catégorisation des bitumes routiers : en fonction de leurs propriétés et selon des mesures normalisées, il est possible de classer les bitumes routiers en six groupes d'applications routières :
- Catégorie 1 - Les bitumes dits purs, c'est-à-dire non modifiés par des additifs ou des polymères. Ils sont employés pour la construction et l'entretien des chaussées routières ou des chaussées revêtues. A titre d'exemple, les grades appartenant à cette catégorie 1, sont les grades 20/30, 35/50, 50/70, 70/100 et 160/220, classés selon leur pénétrabilité à 25°C (mesurée selon la méthode EN 1426:2018) et leurs points de ramollissement TBA (norme EN1427 :2018), respectivement 55-63, 50-58, 46-54, 43-51 et 35/43. Ces grades correspondent par exemple aux grades des bitumes soumis aux spécifications de la norme NF EN 12591 :2009. Un bitume de grade X/Y présente une pénétrabilité à 25°C de X.10⁻¹ à Y.10⁻¹ mm.
- Catégorie 2 - Les bitumes routiers de grade dur. A titre d'exemple, les grades appartenant à cette catégorie 2, sont les grades 10/20, 15/25 et 5/15 classés selon leur pénétrabilité à 25°C (selon la méthode EN 1426 :2018) et leurs points de ramollissement TBA (norme EN1427 :2018), respectivement 58-78, 55-71, 60-76. Ces grades correspondent par exemple aux grades des bitumes soumis aux spécifications de la norme NF EN 12594 :2014
- Catégorie 3 - Les bitumes routiers multigrade 2. A titre d'exemple, les grades appartenant à cette catégorie 3, sont les grades 20/30, 35/50, 50/70, classés selon leur pénétrabilité à 25°C (selon la méthode EN 1426 :2018) et leurs points de ramollissement TBA (norme EN1427 :2018), respectivement 54-63, 57-66, 63-72. Ces grades correspondent par exemple aux grades des bitumes soumis aux spécifications de la norme NF EN 12594 :2014.

- Catégorie 4 - Les bitumes modifiés par des polymères. Ces bitumes sont par exemple soumis aux spécifications de la norme NF EN 14023 :2010.
- Catégorie 5-Les émulsions cationiques de liants bitumineux. Ces émulsions sont par exemple soumises aux spécifications de la norme NF EN 13808 :2013.
- Catégorie 6 - Les bitumes fluxés ou fluidifiés. Ces bitumes sont par exemple soumis aux spécifications de la norme NF EN 15322 :2013.

### Huile de pyrolyse de plastique :

Les termes « huile de pyrolyse de plastique » ou « huile de pyrolyse plastique » peuvent être utilisés indifféremment et font référence aux produits liquides obtenus une fois que les déchets plastiques ont été pyrolysés thermiquement. Le procédé de pyrolyse doit être compris comme un procédé de craquage thermique non sélectif. La pyrolyse implique la rupture des chaînes polymères par chauffage à des températures modérées (environ 400 à 600°C). Plutôt que de décomposer le polymère en ses monomères d'origine, la pyrolyse a tendance à produire une gamme de composés à chaîne plus courte, similaire à bien des égards aux mélanges d'hydrocarbures présents dans le pétrole brut et les produits pétroliers. Un catalyseur est parfois utilisé pour réduire la température de fonctionnement. Le plastique à pyrolyser peut être de tout type. Par exemple, le plastique à pyrolyser peut être du polyéthylène, du polypropylène, du polystyrène, des polyesters, des polyamides, des polycarbonates, etc. L'huile de pyrolyse plastique contient typiquement des paraffines, des i-paraffines (iso-paraffines), des diènes, des alcynes, des oléfines, des naphtènes et des composants aromatiques. L'huile de pyrolyse plastique peut également contenir des impuretés telles que des chlorures organiques, des composés organiques du silicium, des métaux, des sels, des composés soufrés et azotés, etc. L'origine du plastique conduisant à l'huile de pyrolyse plastique est le déchet plastique sans limitation sur l'origine ou sur la nature du plastique. La composition de l'huile de pyrolyse plastique dépend du type de plastique pyrolysé. Il est cependant majoritairement constitué d'hydrocarbures ayant de 1 à 50 atomes de carbone et d'impuretés, à plus de 90% en poids par exemple. Dans la charge initiale, les déchets plastiques peuvent également être associés à des déchets issus de la biomasse. La teneur en biomasse dans la charge initiale peut être comprise entre 0 et 20% poids. L'huile issue de la pyrolyse de plastique peut ainsi contenir de la biomasse.

Lors de la pyrolyse, les plastiques solides passent par une phase de fusion, de décomposition et de volatilisation. Les vapeurs se condensent pour former un produit liquide et des gaz. La condensation peut être effectuée à plusieurs niveaux de température étant donné que plusieurs coupes de liquides ou de cires peuvent être distillées en fonction de leurs points d'ébullition.

Le terme « point d'ébullition » utilisé fait référence au point d'ébullition généralement utilisé dans l'industrie pétrolière et gazière. Les points d'ébullition sont mesurés à la pression atmosphérique. Le point d'ébullition initial est défini comme la valeur de la température lorsque la première bulle de vapeur est formée. Le point d'ébullition final est la température la plus élevée pouvant être atteinte lors d'une distillation standard. A cette température, plus aucune vapeur ne peut être entraînée dans les unités de condensation. La détermination du point d'ébullition initial et final est connue en soi. Selon le domaine d'ébullition du mélange, ils peuvent être déterminés à l'aide de diverses méthodes normalisées comme par exemple la norme ASTM D2887 :2019 relative à la distribution du domaine d'ébullition des coupes pétrolières par chromatographie en phase gazeuse. Pour les compositions contenant des hydrocarbures plus lourds, les normes ASTM D7169 :2020 ou D2892-20 :2020 peuvent également être utilisées. Les domaines d'ébullition des distillats peuvent également être avantageusement mesurés à l'aide de l'ASTM D7500 :2019.

### Description détaillée de l'invention

D'autres avantages et caractéristiques ressortiront plus clairement de la description qui va suivre et dont les modes particuliers de réalisation de l'invention sont donnés à titre d'exemple non limitatifs.

La présente invention consiste à proposer une composition de base bitume comprenant une base bitume classique a) (autre qu'une huile de pyrolyse plastique) dont le point initial d'ébullition est d'au moins 300°C) mélangée à au moins une huile de pyrolyse plastique b) dont le point initial d'ébullition est d'au moins 300°C mesuré selon la norme D7169 :20.

### Base bitume utilisée dans la présente invention

Selon l'invention, ladite au moins une base bitume définie en a) présente une pénétrabilité à 25°C mesurée selon la norme EN1426 :2018 inférieure ou égale à 220. 10⁻¹ mm et un point de ramollissement mesuré selon la norme EN1427 :2018 supérieur ou égal à 35°C.

Cette base bitume peut être une base bitume usuelle produite par raffinage d'un pétrole brut dit « à bitume », tel que précédemment décrit. Les bruts à bitume sont des bruts lourds dont la part "bitume" constitue la partie la plus dense et la plus visqueuse. Les bruts à bitume peuvent provenir du Venezuela (Boscan, Bachaquero, Lagunillas et Tia Juana) ou du Moyen-Orient (Safaniya (ou Arabe lourd) et Kuwait). Autrement dit, ladite au moins une base bitume définie en a) peut être une base issue de la distillation atmosphérique et/ou distillation sous vide de pétrole brut, notamment d'un brut dit « à bitume ».

Avantageusement et de manière non limitative, la composition de bases bitume selon l'invention peut comprendre une ou plusieurs des caractéristiques suivantes :
- au moins une base bitume définie en a) ayant une pénétrabilité à 25°C inférieure ou égale à 100. 10⁻¹ mm et un point de ramollissement supérieur ou égal à 43°C,
- au moins une base bitume définie en a) ayant une pénétrabilité à 25°C inférieure ou égale à 50. 10⁻¹ mm et un point de ramollissement supérieur ou égal à 50°C,
Ladite au moins une base bitume définie en a) peut présenter une pénétrabilité à 25°C mesurée selon la norme EN1426 :2018 comprise de 5.10⁻¹ à 220.10⁻¹ mm, avantageusement de 10.10⁻¹ à 100.10⁻¹ mm ou de 35.10⁻¹ à 100.10⁻¹ mm, par exemple de 5.10⁻¹ à 15.10⁻¹ mm, par exemple de 15.10⁻¹ à 25.10⁻¹ mm, par exemple de 10.10⁻¹ à 25.10⁻¹ mm, par exemple de 20.10⁻¹ à 30.10⁻¹ mm, par exemple de 35.10⁻¹ à 50.10⁻¹ mm, par exemple de 50.10⁻¹ à 70.10⁻¹ mm, par exemple de 70.10⁻¹ à 100.10⁻¹ mm, par exemple de 160.10⁻¹ à 220.10⁻¹ mm.

Quelle que soit sa pénétrabilité, ladite au moins une base bitume définie en a) peut présenter un point de ramollissement mesuré selon la norme EN1427 :2018 supérieur ou égal à 35°C ou à 43°C ou à 50°C, par exemple de 35°C à 43°C, par exemple de 43°C à 51°C, par exemple de 46°C à 54°C, par exemple de 50 à 58°C, par exemple de 55°C à 63°C.

En particulier, le point de ramollissement peut être de 60°C à 78°C, par exemple de 58°C à 78°C ou de 55°C à 71°C ou de 60°C à 76°C.

En particulier, le point de ramollissement peut être de 35°C à 63°C, par exemple de 35°C à 43°C ou de 43°C à 51°C ou de 46°C à 54°C, ou de 50°C à 58°C ou de 55°C ou de 63°C.

En particulier, ladite au moins une base bitume définie en a) peut présenter l'un des groupes de caractéristiques suivantes :
- une pénétrabilité à 25°C de 20.10⁻¹ à 220.10⁻¹ mm et un point de ramollissement supérieur ou égal à 35°C, par exemple de 35°C à 63°C.
- une pénétrabilité à 25°C de 5.10⁻¹ à 25.10⁻¹ mm et un point de ramollissement supérieur ou égal à 55°C, par exemple de 55°C à 78°C.
- une pénétrabilité à 25°C de 20.10⁻¹ à 70.10⁻¹ mm et un point de ramollissement supérieur ou égal à 54°C, par exemple de 54°C à 72°C.

A titre d'exemple, ladite au moins une base bitume définie en a) peut présenter l'un des groupes de caractéristiques suivantes :
- une pénétrabilité à 25°C de 15. 10⁻¹ à 25.10⁻¹ mm et un point de ramollissement supérieur ou égal à 55°C, par exemple de 55°C à 71°C,
- une pénétrabilité à 25°C de 10.10⁻¹ à 20.10⁻¹ mm et un point de ramollissement supérieur ou égal à 58°C, par exemple de 58°C à 78°C,
- une pénétrabilité à 25°C de 5.10⁻¹ à 15.10⁻¹ mm et un point de ramollissement supérieur ou égal à 60°C, par exemple de 60°C à 76°C,
- une pénétrabilité à 25°C de 20.10⁻¹ à 30.10⁻¹ mm et un point de ramollissement supérieur ou égal à 54°C, par exemple de 54°C à 63°C,
- une pénétrabilité à 25°C de 35.10⁻¹ à 50.10⁻¹ mm et un point de ramollissement supérieur ou égal à 57°C, par exemple de 57°C à 66°C,
- une pénétrabilité à 25°C de 50.10⁻¹ à 70.10⁻¹ mm et un point de ramollissement supérieur ou égal à 63°C, par exemple de 63°C à 72°C,
- une pénétrabilité à 25°C de 20.10⁻¹ à 30.10⁻¹ mm et un point de ramollissement supérieur ou égal à 55°C, par exemple de 55°C à 63°C,
- une pénétrabilité à 25°C de 35.10⁻¹ à 50.10⁻¹ mm et un point de ramollissement supérieur ou égal à 50°C, par exemple de 50°C à 58°C,
- une pénétrabilité à 25°C de 50.10⁻¹ à 70.10⁻¹ mm et un point de ramollissement supérieur ou égal à 46°C, par exemple de 46°C à 54°C,
- une pénétrabilité à 25°C de 70.10⁻¹ à 100.10⁻¹ mm et un point de ramollissement supérieur ou égal à 43°C, par exemple de 43°C à 51°C,
- une pénétrabilité à 25°C de 160.10⁻¹ à 220.10⁻¹ mm et un point de ramollissement supérieur ou égal à 35°C, par exemple de 35°C à 43°C.

Ladite au moins une base bitume définie en a) peut notamment appartenir à l'une des catégories de bitume 1 à 6 définies plus haut.

### Huile de pyrolyse plastique utilisée dans la présente invention.

Typiquement, ladite au moins une huile de pyrolyse plastique définie en b) est issue d'un procédé de pyrolyse du plastique.

Le procédé de production des huiles de pyrolyse plastique et donc la pyrolyse des déchets plastiques est décrit par exemple dans les brevets US8895790, US2014/0228606 ou WO 2016/009333.

Les plastiques mélangés (par exemple, les déchets plastiques) sont placés dans une unité de pyrolyse appelée également pyrolyseur. Dans l'unité de pyrolyse, les déchets plastiques sont convertis par pyrolyse en un produit de pyrolyse, le produit de pyrolyse comprenant une phase gazeuse (par exemple, des gaz de pyrolyse, tels que des gaz en C1 à C4, de l'hydrogène (H2), du monoxyde de carbone (CO), du carbone (CO2) principalement) et une phase liquide désignée comme une huile de pyrolyse de plastique. Les déchets plastiques peuvent comprendre des déchets plastiques postconsommation, tels que des déchets plastiques mélangés. Les plastiques mélangés peuvent comprendre des plastiques non chlorés (par exemple, polyoléfines, polyéthylène, polypropylène, polystyrène, copolymères, etc.), des plastiques chlorés (par exemple, polychlorure de vinyle (PVC), polychlorure de vinylidène (PVDC), etc.), et similaires, ou leurs mélanges. Généralement, les déchets plastiques comprennent des molécules à longue chaîne ou des hydrocarbures polymères. Les déchets plastiques peuvent également inclure des pneus usagés ou de la biomasse.

L'unité de pyrolyse peut être n'importe quel réacteur approprié configuré pour convertir les déchets plastiques en produits en phase gazeuse et en phase liquide (par exemple, simultanément). Le réacteur peut être configuré pour un fonctionnement en phase gazeuse, en phase liquide, en phase vapeur-liquide, en phase gaz-solide, en phase liquide-solide ou en phase de suspension. Le réacteur peut contenir un ou plusieurs lits de matériau inerte ou de catalyseur de pyrolyse comprenant du sable, de la zéolite, de l'alumine, un catalyseur de craquage catalytique, ou des combinaisons de ceux-ci. Généralement, le catalyseur de pyrolyse est capable de transférer de la chaleur aux composants soumis au processus de pyrolyse dans l'unité de pyrolyse. Alternativement, l'unité de pyrolyse peut fonctionner sans aucun catalyseur (par exemple, pyrolyse thermique pure). L'unité de pyrolyse peut fonctionner de manière adiabatique, isotherme, non adiabatique, non isotherme, ou des combinaisons de celles-ci. Les réactions de pyrolyse peuvent être réalisées en une seule étape ou en plusieurs étapes. Par exemple, l'unité de pyrolyse peut être constituée de deux réacteurs reliés en série.

Dans une configuration où l'unité de pyrolyse comprend deux réacteurs, le procédé de pyrolyse peut être divisé en une première étape qui est réalisée dans un premier réacteur et en une deuxième étape fluidiquement connectée en aval à la première étape qui est réalisée dans le deuxième réacteur.

Dans certaines configurations, l'unité de pyrolyse peut comprendre un ou plusieurs équipements configurés pour convertir des matières plastiques mélangées en des produits formant une phase gazeuse et en phase liquide. Le ou les équipements peuvent contenir ou non un matériau inerte ou un catalyseur de pyrolyse tels que décrit ci-dessus. Des exemples de tels équipements comprennent une ou plusieurs extrudeuses chauffées, four rotatif chauffé, réacteurs de type réservoir chauffé, réacteurs à lit garni, réacteurs à lit fluidisé bouillonnant, réacteurs à lit fluidisé circulant, cuves chauffées vides, surfaces chauffées fermées où le plastique coule le long de la paroi et craque, récipients entourés de fours, ou tout autre équipement approprié offrant une surface chauffée pour aider au craquage.

L'unité de pyrolyse peut être configurée pour pyrolyser (par exemple, craquer), et dans certains aspects (par exemple, lorsque de l'hydrogène est ajouté à l'unité de pyrolyse), hydrogéner les composants du flux de déchets plastiques alimentant l'unité de pyrolyse. Des exemples de réactions qui peuvent se produire dans l'unité de pyrolyse comprennent, de manière non limitative, l'isomérisation d'une ou plusieurs paraffines normales en une ou plusieurs i-paraffines, l'ouverture sélective du cycle d'une ou plusieurs cycloparaffines en une ou plusieurs i-paraffines, le craquage de molécules à longue chaîne en molécules à courte chaîne, l'élimination des hétéroatomes des hydrocarbures contenant des hétéroatomes (par exemple, la déchloration), l'hydrogénation du coke généré dans le procédé, ou des combinaisons de celles-ci.

Dans une ou plusieurs configurations de l'unité de pyrolyse, un gaz de purge d'espace de tête peut être utilisé dans tout ou partie du ou des étages de pyrolyse (conversion des déchets plastiques en produits formant une phase liquide et/ou une phase gazeuse) pour améliorer le craquage de plastiques, pour produire des produits de valeur ou encore pour fournir une alimentation pour le vapocraquage, ou des combinaisons de ceux-ci. Le gaz de purge d'espace de tête peut comprendre de l'hydrogène (H2), des gaz d'hydrocarbures en C1 à C4 (par exemple, des alcanes, du méthane, de l'éthane, du propane, du butane, de l'isobutane), des gaz inertes (par exemple, de l'azote (N2), de l'argon, de l'hélium, de la vapeur), ou des combinaisons de ceux-ci. L'utilisation d'un gaz de purge d'espace de tête aide à la déchloration dans l'unité de pyrolyse, lorsque les déchets plastiques comprennent des plastiques chlorés. Le gaz de purge de l'espace de tête peut être introduit dans l'unité de pyrolyse pour faciliter l'élimination des matières volatiles entraînées par les plastiques mélangés et fondus présents dans l'unité de pyrolyse.

Un flux contenant de l'hydrogène (H2) peut être ajouté à l'unité de pyrolyse pour enrichir l'environnement de l'unité de pyrolyse en H2 et ainsi aider à éliminer le chlorure d'hydrogène piégé dans l'unité de pyrolyse et fournir un environnement local riche en hydrogène dans la masse fondue ou le liquide de pyrolyse, ou des combinaisons celuici ; par exemple via un flux contenant de l'H2 alimenté directement à l'unité de pyrolyse indépendamment du flux de déchets plastiques. Dans certains aspects, H2 peut également être introduit avec le flux dans l'unité de pyrolyse, avec des mesures de sécurité adéquates liées à la manipulation de l'hydrogène avec une charge de matière plastique.

L'unité de pyrolyse peut faciliter toute réaction des composants du flux de déchets plastiques en présence ou avec de l'hydrogène. Des réactions peuvent se produire, telles que l'ajout d'atomes d'hydrogène à des doubles liaisons de molécules insaturées (par exemple, des oléfines), entraînant des molécules saturées (par exemple, des paraffines, des i-paraffines, des naphtènes). En plus ou en variante, les réactions dans l'unité de pyrolyse peuvent provoquer une rupture d'une liaison d'un composé organique, avec une réaction ultérieure et/ou le remplacement d'un hétéroatome par de l'hydrogène.

L'utilisation d'hydrogène dans l'unité de pyrolyse peut avoir des effets bénéfiques sur i) la réduction du coke résultant du craquage, ii) le maintien du catalyseur utilisé (le cas échéant) dans le procédé dans un état actif, iii) l'amélioration de l'élimination du chlorure du flux de telle sorte que le produit de pyrolyse de l'unité de pyrolyse soit sensiblement déchloré par rapport au flux de déchets plastiques, ce qui minimise les besoins d'élimination des chlorures dans les unités en aval de l'unité de pyrolyse, iv) l'hydrogénation des oléfines, v) la réduction des dioléfines dans le produit de pyrolyse, vi) l'aide au fonctionnement de l'unité de pyrolyse à des températures réduites pour les mêmes niveaux de conversion du flux de déchets plastiques dans l'unité de pyrolyse, ou des combinaisons de i) à vi).

Les procédés de pyrolyse dans l'unité de pyrolyse peuvent être de faible sévérité ou de sévérité élevée. Les procédés de pyrolyse de faible sévérité peuvent se produire à une température inférieure à environ 450°C, de préférence de 250°C à 450 °C, de préférence de 275°C à 425°C, ou de préférence de 300°C à 400°C, et peuvent produire une huile de pyrolyse riche en mono-oléfines et di-oléfines par exemple au moins 15% en poids ainsi qu'une quantité importante d'aromatiques par exemple au moins 10% poids. Les procédés de pyrolyse à haute sévérité peuvent se produire à une température égale ou supérieure à environ 450 °C, de préférence de 450°C à 750°C, de préférence de 500°C à 700°C, ou de préférence de 550°C à 650°C, et peuvent produire une huile de pyrolyse riches en aromatiques, ainsi que plus de produits gazeux (par rapport à la pyrolyse de faible sévérité).

Un produit de pyrolyse peut être récupéré en tant qu'effluent de l'unité de pyrolyse et acheminé (par exemple, écoulé, par exemple par pompage, gravité, différence de pression, etc.) vers une unité de séparation par pyrolyse. Le produit de pyrolyse peut être séparé dans l'unité de séparation en un flux de gaz de pyrolyse et une huile de plastique de pyrolyse. L'unité de séparation peut comprendre tout séparateur gaz-liquide approprié, tel qu'un séparateur vapeur-liquide, des séparateurs huile-gaz, des séparateurs gaz-liquide, des dégazeurs, des épurateurs, des pièges, des ballons éclair, des ballons aspirants de compresseur, des séparateurs par gravité, des séparateurs centrifuges, des séparateurs à palettes filtrantes, des tampons anti-buée, des coalesceurs liquide-gaz, des colonnes de distillation et similaires, ou des combinaisons de ceux-ci.

Ainsi, l'huile issue de la pyrolyse du plastique obtenue comme décrit ci-dessus peut être séparée en plusieurs coupes:
- La coupe légère type naphta avec un intervalle de distillation compris entre 50 et 200°C et une masse volumique comprise entre 720 Kg/m³ et 750 Kg/m³.
- La coupe moyenne type diesel avec un intervalle de distillation compris entre 200°C et 300°C et une masse volumique comprise entre 750 Kg/m³ et 800 Kg/m³.
- La coupe lourde type VGO (Vaccum Gasoil) avec un intervalle de distillation compris entre 300°C et 450°C et une masse volumique comprise entre 800 Kg/m³ et 840 Kg/m³.
- Une coupe très lourde type VR (Visco-Réduit) avec un point initial d'ébullition d'au moins 450 °C et une masse volumique comprise entre 840 Kg/m³ et 870 Kg/m³.

L'huile de pyrolyse de plastique b) selon l'invention et dont le point initial d'ébullition est d'au moins 300°C mesuré selon la norme D7169 :20, est issue d'une huile de pyrolyse plastique obtenue par un procédé de pyrolyse de plastique tel que décrit précédemment.

Avantageusement et de manière non limitative, l'huile de pyrolyse plastique peut avoir un point initial d'ébullition d'au moins 370°C mesuré selon la norme D7169 :20. Avantageusement et de manière non limitative, l'huile de pyrolyse plastique peut avoir un point initial d'ébullition d'au moins 390°C mesuré selon la norme D7169 :20. Avantageusement et de manière non limitative, l'huile de pyrolyse plastique peut avoir un point initial d'ébullition d'au moins 450°C mesuré selon la norme D7169 :20.

### Composition selon l'invention

Selon l'invention, on prépare une composition de bases bitume comprenant au moins :
a. de 95 à 99% en poids d'au moins une base bitume ayant une pénétrabilité à 25°C mesurée selon la norme EN1426 :2018 inférieure ou égale à 220. 10⁻¹ mm et un point de ramollissement mesuré selon la norme EN1427 :2018 supérieur ou égal à 35°C,
b. de 1 à 5 % en poids d'au moins une huile de pyrolyse de plastique dont le point d'ébullition initial est d'au moins 300°C mesuré selon la norme D7169 :20.

Avantageusement et de manière non limitative, la composition de bases bitume selon l'invention peut comprendre au moins :
a) de 98 à 99% en poids d'au moins une base bitume telle que définie en a),
b) de 1 à 2 % en poids d'au moins une huile de pyrolyse de plastique telle que définie en b).

De manière générale, l'au moins une base définie en a) et l'au moins une huile de pyrolyse définies en b) peuvent présenter chacune l'une des caractéristiques ou groupes de caractéristiques précédemment définis.

Avantageusement, la composition de bases bitume peut comprendre de 1 à 5% en poids, par exemple de 1 à 2% en poids, d'au moins une huile de pyrolyse de plastique dont le point d'ébullition initial est d'au moins 300°C mesuré selon la norme D7169 :20.

La somme des pourcentages massiques des bases bitumes définies en a) et b) peut être égale à 100%. Autrement dit, la composition de bases bitume selon l'invention peut être constituée d'une ou plusieurs bases bitume tel que définie en a) et d'une ou plusieurs huiles de pyrolyses plastique, telle que définie en b). En particulier, la composition de bases bitume selon l'invention peut être constitué d'une unique base bitume telle que définie en a) et d'une unique huile de pyrolyse plastique telle que définie en b).

La composition de bases bitume selon l'invention peut être réalisée par simple mélange des bases bitume définies en a) et b), notamment sous agitation, à une température suffisante pour assurer un mélange homogène de ces bases. Cette température est généralement supérieure de 70°C au point de ramollissement de chacune des bases (base bitume et huile de pyrolyse plastique).

On pourra prévoir de préchauffer chaque base séparément ou non, éventuellement à des températures différentes, avant de procéder au mélange. Ce préchauffage peut être effectué pendant une durée suffisante pour que la température de la base soit homogène.

La base bitume définie en b) peut être préchauffée au moins 2h à une température inférieure à 120°C pour éviter la formation de sédiments.

L'invention concerne également l'utilisation d'une huile de pyrolyse de plastique ayant un point initial d'ébullition d'au moins 300°C mesurée selon la norme D7169 :20 comme composant pour bitume routier.

L'invention concerne notamment l'utilisation d'une huile de pyrolyse de plastique ayant un point initial d'ébullition d'au moins 300°C, de préférence d'au moins 370°C, de préférence d'au moins 400°C, de préférence d'au moins 450°C issue d'un procédé de pyrolyse de plastique comme composant pour bitume routier.

Plusieurs huiles de pyrolyse de plastique dont le point initial d'ébullition est d'au moins 300°C peuvent également être utilisées. L'huile de pyrolyse peut être telle que précédemment défini.

Tel que précédemment décrit, cette huile de pyrolyse plastique forme alors une base bitume qui peut être utilisée pour réaliser un bitume routier.

On peut ainsi fabriquer une base bitume, notamment une base de bitume routier, par mélange d'au moins une huile de pyrolyse plastique, telle que précédemment définie, avec au moins une base bitume, telle que précédemment définie, dans les proportions précisées pour la composition selon l'invention.

### Exemples

Pour mémoire, dans toute la présente demande, les propriétés suivantes des bases sont mesurées comme indiqué dans le tableau 1 ci- dessous :

**Tableau 1**

| Propriété | Abréviation | Unité | Norme de mesure |
|---|---|---|---|
| Pénétrabilité à l'aiguille à 25°C | P25 | 1/10mm | EN 1426:2018 |
| Température de ramollissement bille et anneau | TBA | °C | EN 1427:2018 (avec utilisation de liquides pour bain qui peut être de l'eau distillée ou déminéralisée ou du glycérol) |
| Point de fragilité FRAASS | Fraass | °C | EN12593:2015 |
| Viscosité cinématique à 135°C | VD35 | mm²/s | EN12595:2014 |
| Viscosité dynamique à 60°C | VD60 | Pa.s | EN12596:2014 |
| Indice Pfeiffer | IP | sans | EN 12591:2009 |
| Masse volumique 15°C | MV | Kg/m³ | ASTM D4052:2018 |
| Viscosité cinématique à90°C | VD90 | mm²/s | EN 12595:2014 |

Quatre bases bitumes correspondant à la base a) selon l'invention ont été utilisées. Elles ont été obtenues selon les procédés bien connus en soi et comme décrits précédemment. Leurs caractéristiques sont présentées dans le tableau 2 ci-dessous.

**Tableau 2**

| Caractéristiques | Base A Grade 70/100 | Base C Grade 35/50 | Base E Grade 35/50 | Base D Grade 35/50 |
|---|---|---|---|---|
| Liant neuf | | | | |
| P25 | 84 | 40 | 40 | 36 |
| TBA | 46,2 | 51,2 | 51,4 | 53,4 |
| Fraass | 0,2 | -10 | -8 | NM |
| IP | -0,9 | -1,4 | -1,3 | -1,1 |

| Caractéristiques | | | | |
|---|---|---|---|---|
| Liant vieilli après RTFOT EN12607-1 [2014] | | | | |
| P25 | 50 | 24 | 24 | 22 |
| TBA | 50,8 | 61,2 | 60,6 | 59,8 |
| Variation de TBA | 4,6 | 10 | 9,2 | 6,4 |

Deux huiles de pyrolyse plastique correspondant à la base b) selon l'invention ont été utilisées. Elles ont été obtenues selon les procédés bien connus en soi et comme décrits précédemment. Leurs caractéristiques sont présentées dans le tableau 3 ci-dessous.

**Tableau 3**

| Caractéristiques | Composant B : Huile de pyrolyse plastique ayant un point initial d'ébullition de 450°C mesuré selon l'ASTM D7169 :20. | Composant F : Huile de pyrolyse plastique ayant un point initial d'ébullition de 370°C mesuré selon l'ASTM D7169 :20. |
|---|---|---|
| Masse volumique 15°C | 848,1 | 827,5 |
| VD 90 | 14.09 | 4,837 |
| P25 | 96 | 90 |
| TBA | 74 (dans le glycerol) | 52,2 |
| Fraass | NM | NM |
| IP | -0,8 | 0,9 |

| | | |
|---|---|---|
| *NM : Non mesuré* | | |

Avant la mise en mélange, la base a) selon l'invention est préchauffée en étuve ventilée à 130°C. La durée de préchauffage est estimée à 1h30.

La base b) selon l'invention a été préchauffée 2h à une faible température de 110°C pour éviter la formation de sédiments.

Le mélange est chauffé par un système de « chauffe-ballon » avec résistance électrique, thermostat et sonde de température PT100 thermo-couplé. L'agitation est réalisée par un système type « Rayneri » qui est une turbine centripète métal couplée à un système d'agitation.

Le mélange est chauffé à 160°C sous agitation (250-300 t/min) pendant une durée de 30 minutes de façon à obtenir un mélange homogène.

Des mesures de pénétrabilité, de TBA et de FRAASS sont réalisées sur chacun des mélanges selon les méthodes normalisées. Les caractéristiques des mélanges sont présentées dans les tableaux 4 et 5 ci-dessous.

**Tableau 4 : Mélanges réalisés avec la base A de grade 70/100**

| Caractéristiques | 100% base A Grade 70/100 | Mélange 1 : 95% de base A et 5% de base B | Mélange 6 : 99,5% de base A et 0,5% de base F |
|---|---|---|---|
| Liant neuf | | | |
| P25 | 84 | 87 | 129 |
| TBA | 46,2 | 50 | 44,6 |
| Fraass | 0,2 | NM | -15 |
| IP | -0,9 | 0,2 | -0,1 |

| Caractéristiques | | | |
|---|---|---|---|
| Liant vieilli après RTFOT EN12607-1 [2014] | | | |
| P25 | 50 | 57 | 72 |
| TBA | 50,8 | 53,8 | 48,2 |
| Variation de TBA | 4,6 | 3,8 | 3,6 |

**Tableau 5 : Mélanges réalisés avec les bases C, D et E de grade 35/50**

| Caractéristiques | 100% base C Grade 35/50 | Mélange 2 : 99% de base C et 1% de base B | Mélange 3 : 98% de base C et 2% de base B | 100% base E | Mélange 4 : 99,5% de base E et 0,5% de base B | 100% base D | Mélange 5 : 99% de base D et 1% de base B |
|---|---|---|---|---|---|---|---|
| Liant neuf | | | | | | | |
| P25 | 40 | 38 | 43 | 40 | 38 | 36 | 50 |
| TBA | 51,2 | 51,4 | 50,2 | 51,4 | 51,2 | 53,4 | 50 |
| Fraass | -10 | NM | -10 | -8 | -10 | NM | NM |
| IP | -1,4 | -1,4 | -1,5 | -1,3 | -1,5 | -1,1 | -1,2 |

| Caractéristiques | | | | | | | |
|---|---|---|---|---|---|---|---|
| Liant vieilli après RTFOT EN12607-1 [2014] | | | | | | | |
| P25 | 24 | NM | 25 | 24 | 23 | 22 | 30 |
| TBA | 61,2 | 59,8 | 58 | 60,6 | 59,2 | 59,8 | 55 |
| Variation de TBA | 10 | 8,4 | 7,8 | 9,2 | 8 | 6,4 | 5 |

Pour les mélanges 1 à 6, on observe une amélioration des propriétés de TBA après vieillissement RTFOT (NF EN 12607-1 [2014]). En effet, la variation de la TBA est plus faible pour les mélanges 1 à 6 par rapport aux bases a) seules. Cet effet est particulièrement intéressant car la TBA est une contrainte limitante dans la formulation d'un bitume selon la spécification EN12591 :2009.

Plus encore, les mélanges 1 à 5 montrent qu'il est possible d'incorporer une huile de pyrolyse plastique B de point initial d'ébullition de 450°C sans dégrader les propriétés du bitume. Les mélanges 1, 3, 4 et 5 ont des propriétés conformes aux propriétés obligatoires attendues par la spécification EN12591 tant au niveau de la pénétrabilité à 25°C que du point de ramollissement (TBA).

Sans être liée par une quelconque théorie, l'huile de pyrolyse plastique b) de point initial d'ébullition de 450°C (base B) ou l'huile de pyrolyse plastique de point initial d'ébullition de 370°C (base F) peuvent apporter une réserve par rapport à la spécification de variations de TBA, c'est-à-dire un gain en TBA, qui peut être assimilée à un effet booster. Les résultats sont rassemblés dans le tableau 6 ci-dessous.

Les huiles de pyrolyse plastiques B et F selon b) peuvent également être mélangées entre elles avant d'être incorporées à une base bitume. L'incorporation peut ainsi être envisagée à hauteur de 5% (en poids).

**Tableau 6**

| | Variation de TBA après vieillissement par rapport à la base seule | Gain en TBA après vieillissement par rapport à la base seule |
|---|---|---|
| Mélange 1 - 5% d'huile de pyrolyse B | 0,8 | 17% |
| Mélange 2 - 1 % d'huile de pyrolyse B | 1,6 | 16% |
| Mélange 3 - 2% d'huile de pyrolyse B | 2,2 | 22% |
| Mélange 4 - 0,5% d'huile de pyrolyse B | 1,2 | 13% |
| Mélange 5 - 1% d'huile de pyrolyse B | 1,4 | 22% |
| Mélange 6 - 5% d'huile de pyrolyse F | 1 | 22% |

## Revendications

1. Composition de bases bitume comprenant au moins :
a. de 95 à 99% en poids d'au moins une base bitume ayant une pénétrabilité à 25°C mesurée selon la norme EN1426 :2018 inférieure ou égale à 220. 10⁻¹ mm et un point de ramollissement mesuré selon la norme EN1427 :2018 supérieur ou égal à 35°C.
b. de 1 à 5 % en poids d'au moins une huile de pyrolyse de plastique dont le point d'ébullition initial est d'au moins 300°C mesuré selon la norme D7169 :20

2. Composition de bases bitume selon la revendication 1 comprenant au moins :
- de 98 à 99% en poids d'au moins une base bitume telle que définie en a)
- de 1 à 2 % en poids d'au moins une huile de pyrolyse de plastique telle que définie en b).

3. Composition de bases bitume selon l'une quelconque des revendications précédentes dans laquelle ladite au moins une base bitume définie en a) est une base issue de la distillation atmosphérique et/ou distillation sous vide de pétrole brut.

4. Composition de bases bitume selon l'une quelconque des revendications précédentes, dans laquelle ladite au moins une huile de pyrolyse plastique définie en b) est issue d'un procédé de pyrolyse du plastique.

5. Composition de bases bitume selon l'une quelconque des revendications précédentes dans laquelle ladite au moins une base bitume définie en a) présente une pénétrabilité à 25°C comprise de 5.10⁻¹ à 220.10⁻¹ mm, par exemple de 10.10⁻¹ à 100.10⁻¹ mm ou de 35.10⁻¹ à 100.10⁻¹ mm.

6. Composition de bases bitume selon l'une quelconque des revendications précédentes, dans laquelle ladite au moins une base bitume définie en a) présente un point de ramollissement supérieur ou égal à 43°C

7. Composition de bases bitume selon la revendication 1 ou 2, dans laquelle ladite au moins une base bitume définie en a) présente un point de ramollissement supérieur ou égal à 50°C.

8. Composition de bases bitume selon l'une quelconque des revendications précédentes comprenant au moins une huile de pyrolyse plastique définie en b) ayant un point initial d'ébullition d'au moins 370°C mesuré selon la norme D7169 :20, préférentiellement d'au moins 400°C mesuré selon la norme D7169 :20, préférentiellement d'au moins 450°C mesuré selon la norme D7169 :20.

9. Utilisation d'une huile de pyrolyse de plastique ayant un point initial d'ébullition d'au moins 300°C mesurée selon la norme D7169 :20 comme composant pour bitume routier, préférentiellement d'au moins 400°C mesuré selon la norme D7169 :20, préférentiellement d'au moins 450°C mesuré selon la norme D7169 :20.
